# EUROPEAN PATENT APPLICATION

(11) **EP 4 120 417 A1**
(43) Date of publication of application: **18.01.2023**
(21) Application number: 21203327.8
(22) Date of filing: 19.10.2021
(51) Int. Cl.: H01M 10/0525, H01M 10/0567, H01M 50/417

(54) **ADDITIVES TO IMPROVE WETTING OF SEPARATORS OF LITHIUM-ION BATTERIES**

(30) Priority: 13.07.2021 US 202163221462 P
(71) Applicant: ExxonMobil Chemical Patents Inc., Baytown, TX 77520 (US)
(72) Inventor: BIEN, Daniel, 53424 Remagen (DE); KIM, Sung A, Houston, 77008 (US)
(74) Representative: ExxonMobil Chemical Europe Inc.

(57) **Abstract**

A lithium-ion battery may include: a cathode; an anode; a separator; and an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

## Description

### FIELD

The present disclosure relates to additives for electrolyte solutions for use in lithium-ion batteries including methods and batteries implementing such electrolyte solutions.

### BACKGROUND

During the charging and discharging of lithium-ion batteries, lithium ions are transported between the positive and negative electrodes through an electrolyte solution and separator. The separator is a porous membrane which allows lithium-ion transfer while preventing an internal short circuit. When the electrolyte solution easily wets the separator, lithium-ion transfer is facilitated. The poor wettability of the separator, which may be caused by the pores in the separators not being completely filled by electrolyte solutions, leads to high resistance for lithium-ion transport. In addition to high internal resistance of the battery cell, the incomplete wetting can result in a shorter cycle life of battery as a solid electrolyte interphase (SEI) layer will not grow uniformly and may seed lithium dendrite formation.

In the lithium-ion battery manufacturing process, electrolyte filling and separator wetting can be the most time consuming steps in the cell assembly. The wetting procedure can take up to several hours and significantly contribute to overall battery production time and costs. There is a need to achieve a complete wetting within a reduced process time in lithium-ion batteries.

One way to optimize the wetting process is to change the wetting properties of the separator of the lithium-ion battery by surface modification. For example, traditional separator materials including polyethylene (PE), polypropylene (PP), and/or combinations may be functionalized with silica or alumina, which improve hydrophilicity of polyolefin.

Another way to improve the wettability of separators is by introducing an additive to the electrolyte solution which improves hydrophilicity between the separator and electrolyte. As compared to the polyolefin surface modification method, introducing additives is typically a faster and cheaper process because simple mixing is often the only additional step. An example additive is the triblock polyether PLURONIC^{™}, which has shown enhanced wetting of the polyethylene separator and suppressed growth of lithium dendrites.

### SUMMARY

The present disclosure relates to additives for electrolyte solutions for use in lithium-ion batteries including methods and batteries implementing such electrolyte solutions.

A nonlimiting example lithium-ion battery of the present disclosure comprises: a cathode; an anode; a separator; and an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

A nonlimiting example method of the present disclosure comprises: producing a lithium-ion battery with an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

A nonlimiting example method of the present disclosure comprises: positioning an anode, a cathode, and a separator of the lithium-ion battery such that the separator is between the anode and the cathode; and adding an electrolyte solution to the lithium-ion battery such that the electrolyte solution wets the separator and contacts the anode and the cathode, wherein the electrolyte solution comprises a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

### BRIEF DESCRIPTION OF THE FIGURES

For a better understanding of the nature, objects, and processes involved in this disclosure, reference should be made to the detailed description taken in conjunction with the accompanying figures. The subject matter disclosed is capable of considerable modifications, alterations, combinations, and equivalents in form and function, as will occur to those skilled in the art and having the benefit of this disclosure.
FIG. 1 illustrates a diagram of a nonlimiting example of a portion of a lithium-ion battery.
FIG. 2 illustrates a diagram of a nonlimiting example manufacturing process for lithium-ion batteries that emphasizes the cell assembly.

### DETAILED DESCRIPTION

The present disclosure relates to additives for electrolyte solutions for use in lithium-ion batteries. More specifically, the present disclosure uses ester molecules with long alkyl chains as an additive to improve wettability of separators in lithium-ion batteries.

Improved wetting in the separator of lithium-ion batteries may lead to a higher capacity at increased current density. Further, the ester molecule additives described herein may advantageously wet the separator faster than other additives, which would reduce the manufacturing time of lithium-ion batteries.

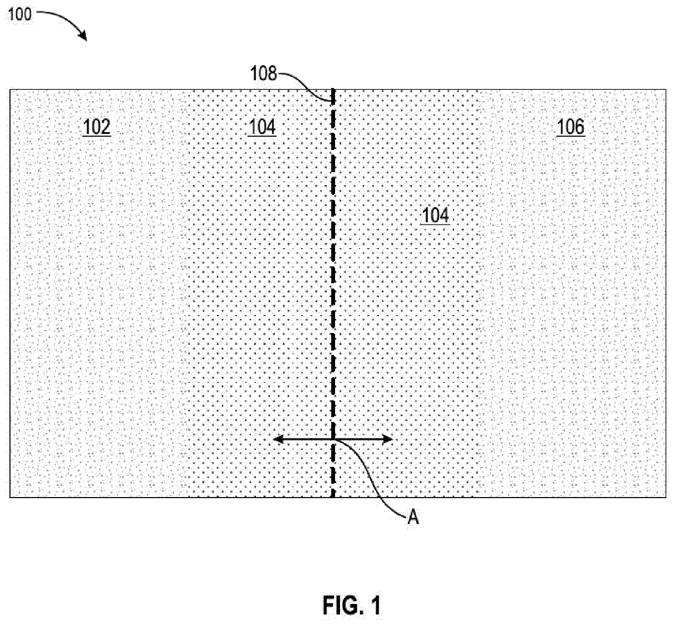

FIG. 1 illustrates a diagram of a nonlimiting example of a portion 100 of a lithium-ion battery. The lithium-ion battery includes an anode 102, an electrolyte solution 104, a cathode 106, and a separator 108. While there are various configurations of said components, generally all lithium-ion batteries include these four components 102, 104, 106, and 108. The cathode 106 is generally a source of lithium ions. The composition of the cathode may affect the capacity and average voltage of the lithium-ion battery. The anode 102 stores and releases lithium ions from cathode 106, which allows current to pass through an external circuit (not illustrated). The electrolyte solution 104 is a medium that helps ions move reversibly (arrow A) between the cathode 106 and the anode 102. The separator 104 prevents contact between the cathode 106 and the anode 102.

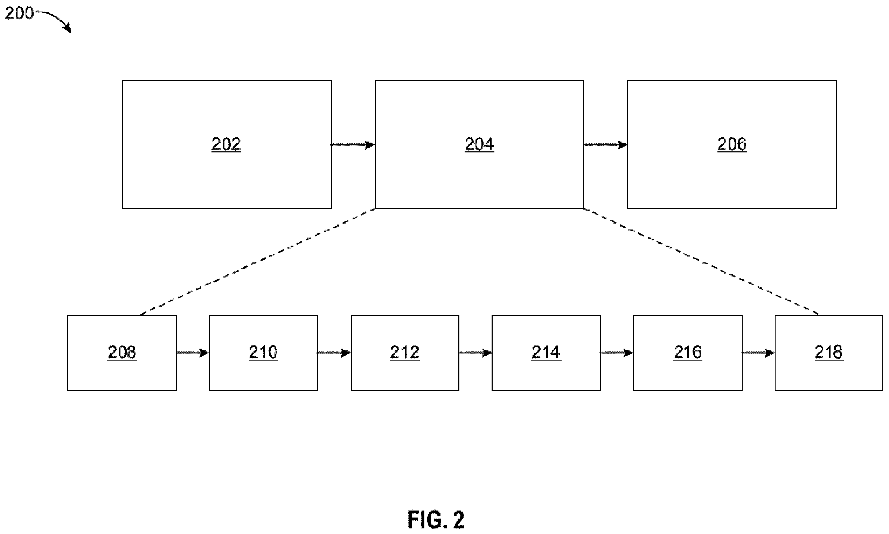

FIG. 2 illustrates a diagram of a nonlimiting example manufacturing process 200 for lithium-ion batteries that emphasizes the cell assembly 204. Generally, a lithium-ion battery manufacturing process 200 includes electrode manufacturing 202 followed by cell assembly 204 and finally battery assembly, aging, and testing 206. The present disclosure focuses on aspects of the cell assembly 204.

In the illustrated manufacturing process 200, the cell assembly 204 includes vacuum drying 208 the separator material, forming 210 the separator structure (e.g., stamping holes in the separator material, stacking the separator material, and other steps as required for the desired separator structure), inserting 212 the separator material into the battery structure (e.g., between the cathode and the anode), filling 214 the appropriate chamber(s) with the electrolyte solution, wetting 216 the separator, and sealing 218 the chamber(s) containing the electrolyte solution and other components of the lithium-ion battery.

More generally, a method for producing a lithium-ion battery may include positioning an anode, a cathode, and a separator of the lithium-ion battery such that the separator is between the anode and the cathode and adding an electrolyte solution to the lithium-ion battery such that the electrolyte solution wets the separator and contacts the anode and the cathode.

The present disclosure relates to improved electrolyte solutions that comprise of alkyl ester additives to improve wetting of separators in lithium-ion batteries.

The electrolyte solution of the present disclosure may comprise a solvent, an electrolyte, and an alkyl ester additive.

Generally, solvents are aprotic organic solvents. Examples of solvents include, but are not limited to, ethylene carbonate (EC), propylene carbonate (PC), dimethyl carbonate (DMC), ethyl methyl carbonate (EMC), diethyl carbonate, propylene carbonate, fluoroethylene carbonate, and any combination thereof.

Electrolytes include lithium salts. Examples of lithium salts include, but are not limited to, lithium hexafluorophosphate (LiPF₆), lithium tetrafluoroborate (LiBF₄), LiClF₄, lithium bis(oxalato)borate, LiN(CF₃SO₂)₂, LiN(C₂F₅SO₂)₂, LiAsF₆, LiC(CF₃SO₂)₃, LiClO₄, LiB(C₂O₄)₂, LiBF₂(C₂O₄)), tris(trimethylsilyl)phosphite (TMSP), and any combination thereof. A preferred electrolyte is lithium hexafluorophosphate (LiPF₆) because it has a high stability and high ion conductivity in a carbonate solvent.

The concentration of electrolyte in the electrolyte solution may be about 5 wt% to about 35 wt% (or about 5 wt% to about 20 wt%, or about 10 wt% to about 25 wt%, or about 15 wt% to about 35 wt%) of the solvent.

The alkyl ester additives of the present disclosure may include one or more esters of an acid (e.g., a monoacid or a diacid) and one or more C₁₋₂₀ alcohols. The alkyl-portion of the alkyl ester may be linear or branched. Further, said alkyl ester additives may be monoester or diesters.

The alkyl esters may be an ester of an acid and one or more C₁₋₂₀ alcohols, such that the total number of carbon atoms from the alkyl portion(s) of the alkyl ester is 5 or more (e.g., 5 to 25, or 5 to 15, or 5 to 10, or 7 to 10, or 8 to 12, or 10 to 20). For example, an alkyl monoester may be an ester of an acid and a C₅₋₂₀ alcohol. In another example, an alkyl diester may be a diester of a diacid and one or more C₁₋₂₀ alcohols such that the total carbon atoms from the one or more C₁₋₂₀ alcohols is 5 or more (e.g., propanol would provide 3 carbon atoms for each of the two alkyls, which is 6 total carbon atoms from the alkyl portion of the alkyl diester; a mixture of methanol and hexanol would provide 7 total carbon atoms from the alkyl portion of the alkyl diester).

Examples of acids include, but are not limited to, formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, sebacic acid, and the like.

Examples of C₁₋₂₀ alcohols include, but are not limited to, methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, 1-icosanol, and the like.

One or more of the foregoing acids may be reacted with one or more of the foregoing alcohols to produce alkyl esters that may be used as alkyl ester additives of the present disclosure.

Examples of commercially available alkyl ester additives include, but are not limited to, JAYFLEX^{™} MB10 (monoester of benzoic acid and isodecyl alcohol, available from ExxonMobil Chemical), ESTEREX^{™} A32 (diester of adipic acid and EXXAL^{™} 8 (comprises octyl alcohol), available from ExxonMobil Chemical), ESTEREX^{™} M11 (produced by esterification reaction of heptanoic acid and EXXAL^{™} 9 (comprises nonyl alcohol), available from ExxonMobil Chemical), EXXATE^{™} 800 (acetic acid, C₇-C₉ (C₈-rich) branched alkyl esters, available from Hallstar), EXXATE^{™} 900 (acetic acid, C₈-C₁₀ (C₉-rich) branched alkyl esters, available from Hallstar), EXXATE^{™} 1000 (acetic acid, C₉-C₁₁ (C₁₀-rich) branched alkyl ester, available from Hallstar), EXXATE^{™} 1300 (acetic acid, C₁₁-C₁₄ (C₁₃-rich) branched alkyl ester, available from Hallstar), and any combination thereof.

The alkyl ester additives in the electrolyte solution may be about 1 wt% to about 20 wt% (or about 1 wt% to about 10 wt%, or about 5 wt% to about 15 wt%, or about 10 wt% to about 20 wt%) of the solvent.

The alkyl ester additives described herein may improve wetting of the separator with the electrolyte solution comprising said alkyl ester additives. The relative wetting ability of fluids may be ascertained using the contact angle.

Contact angle may be measured using a Kruss DSA100 Contact Angle Measuring System with DSA3 software. The measurement of the contact angle may be by the sessile drop method and fitting using the tangent 2 method. Unless otherwise specified, a CELGARD^{®} 2325 (a polypropylene, polyethylene, polypropylene trilayer membrane, available from AOT Battery Technology Co.) is used as the substrate for measuring the contact angle by either of the foregoing methods.

The electrolyte solutions of the present disclosure may have a contact angle of about 50° or less (or about 25° to about 50°, or about 25° to about 45°, or about 25° to about 40°).

Separators suitable for use in conjunction with electrolyte solutions described herein may include membranes that comprise one or more polyolefins. Examples of said polyolefins include, but are not limited to, high density polyethylene, linear low density polyethylene, low density polyethylene, ultrahigh molecular weight polyethylene, polypropylene, and the like, and any combination thereof.

The separators may have any suitable shape that defines a porous boundary between the anode and the cathode. Examples of shapes include, but are not limited to, a pouch-like shape, a cylindrical shape, a planar shape, and any other shape.

The separators may be single-layer or multi-layer. A commercially available separator is CELGARD^{®} 2325.

The compositions and configurations of the anode and cathode may be any suitable compositions and configuration known in the art. Examples of anode compositions include, but are not limited to, graphite, carbon fibers, carbon nanotubes, silica, alumina, and the like, and any combination thereof. Examples of cathode compositions include, but are not limited to, LiCoO₂, LiCo_{0.33}Mn_{0.33}Ni_{0.33}O₂, LiMn₂O₄, LiFePO₄, LiMn₂O_{4,} and the like, and any combination thereof.

### Additional Embodiments

Embodiment 1. A lithium-ion battery comprising: a cathode; an anode; a separator; and an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.
Embodiment 2. The lithium-ion battery of Embodiment 1, wherein the acid is selected from the group consisting of: formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, and sebacic acid.
Embodiment 3. The lithium-ion battery of any of Embodiments 1-2, wherein the C₁₋₂₀ alcohol is selected from the group consisting of: methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, and 1-icosanol.
Embodiment 4. The lithium-ion battery of any of Embodiments 1-3, wherein the alkyl ester is a monoester.
Embodiment 5. The lithium-ion battery of any of Embodiments 1-4, wherein the alkyl ester is a diester.
Embodiment 6. The lithium-ion battery of any of Embodiments 1-5, wherein the alkyl ester additive is present at about 1 wt% to about 20 wt% by weight of the solvent.
Embodiment 7. The lithium-ion battery of any of Embodiments 1-6, wherein the separator comprises a polyolefin.
Embodiment 8. The lithium-ion battery of any of Embodiments 1-7, wherein the electrolyte solution has a contact angle relative to the separator of about 50° or less measured.
Embodiment 9. The lithium-ion battery of any of Embodiments 1-8, wherein a concentration of electrolyte in the electrolyte solution is about 5 wt% to about 35 wt% of the solvent.
Embodiment 10. A method comprising: producing a lithium-ion battery with an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.
Embodiment 11. The method of Embodiment 10, wherein the acid is selected from the group consisting of: formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, and sebacic acid.
Embodiment 12. The method of any of Embodiments 10-11, wherein the C₁₋₂₀ alcohol is selected from the group consisting of: methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, and 1-icosanol.
Embodiment 13. The method of any of Embodiments 10-12, wherein the alkyl ester is a monoester.
Embodiment 14. The method of any of Embodiments 10-13, wherein the alkyl ester is a diester.
Embodiment 15. The method of any of Embodiments 10-14, wherein the alkyl ester additive is present at about 1 wt% to about 20 wt% by weight of the solvent.
Embodiment 16. The method of any of Embodiments 10-15, wherein the separator comprises a polyolefin.
Embodiment 17. The method of any of Embodiments 10-16, wherein the electrolyte solution has a contact angle relative to the separator of about 50° or less measured.
Embodiment 18. The method of any of Embodiments 10-17, wherein a concentration of electrolyte in the electrolyte solution is about 5 wt% to about 35 wt% of the solvent.
Embodiment 18. A method for producing a lithium-ion battery comprising: positioning an anode, a cathode, and a separator of the lithium-ion battery such that the separator is between the anode and the cathode; and adding an electrolyte solution to the lithium-ion battery such that the electrolyte solution wets the separator and contacts the anode and the cathode, wherein the electrolyte solution comprises a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.
Embodiment 19. The method of Embodiment 18, wherein the acid is selected from the group consisting of: formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, and sebacic acid.
Embodiment 20. The method of any of Embodiments 18-19, wherein the C₁₋₂₀ alcohol is selected from the group consisting of: methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, and 1-icosanol.
Embodiment 21. The method of any of Embodiments 18-20, wherein the alkyl ester is a monoester.
Embodiment 22. The method of any of Embodiments 18-21, wherein the alkyl ester is a diester.
Embodiment 23. The method of any of Embodiments 18-22, wherein the alkyl ester additive is present at about 1 wt% to about 20 wt% by weight of the solvent.
Embodiment 24. The method of any of Embodiments 18-23, wherein the separator comprises a polyolefin.
Embodiment 25. The method of any of Embodiments 18-24, wherein the electrolyte solution has a contact angle relative to the separator of about 50° or less.
Embodiment 26. The method of any of Embodiments 18-25, wherein a concentration of electrolyte in the electrolyte solution is about 5 wt% to about 35 wt% of the solvent.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

One or more illustrative embodiments incorporating the invention embodiments disclosed herein are presented herein. Not all features of a physical implementation are described or shown in this application for the sake of clarity. It is understood that in the development of a physical embodiment incorporating the embodiments of the present invention, numerous implementation-specific decisions must be made to achieve the developer's goals, such as compliance with system-related, business-related, government-related and other constraints, which vary by implementation and from time to time. While a developer's efforts might be time consuming, such efforts would be, nevertheless, a routine undertaking for those of ordinary skill in the art and having benefit of this disclosure.

While compositions and methods are described herein in terms of "comprising" various components or steps, the compositions and methods can also "consist essentially of' or "consist of' the various components and steps.

To facilitate a better understanding of the embodiments of the present invention, the following examples of preferred or representative embodiments are given. In no way should the following examples be read to limit, or to define, the scope of the invention.

### EXAMPLES

Contact angle was measured between separator CELGARD^{®} 2325 and electrolyte solutions with various concentrations of ESTEREX^{™} A32 and JAYFLEX^{™} MB10. Prior to any testing, the ESTEREX^{™} A32 and JAYFLEX^{™} MB10 electrolyte solutions were dried over molecular sieve 4Å for 12 days to remove residual water.

The reference electrolyte solution was 1M of LiPF₆ in EC: EMC (3:7 wt). For the test samples, 1 wt% to 10 wt% of ESTEREX^{™} A32 and JAYFLEX^{™} MB 10 were added to said electrolyte solution.

Contact angle measurement was performed to characterize the wettability of the various electrolyte solutions on the separator CELGARD^{®} 2325 surface. Contact angle was tested on a goniometer, DSA100 Kruss GmbH where a minimum of four measurements were completed for determination of contact angles. Drop shape fitting and contact angle determination was performed by sessile drop method and the tangent 2 fitting method. The contact angles are presented in Table 1.

**Table 1**

| Sample | Contact Angle (°) |
|---|---|
| Reference | 52.5 ± 0.5 |
| 1 wt% ESTEREX^{™} A32 | 51.8 ± 1.0 |
| 5 wt% ESTEREX^{™} A32 | 41.9 ± 3.7 |
| 10 wt% ESTEREX^{™} A32 | 35.9 ± 0.8 |
| 1 wt% JAYFLEX^{™} MB10 | 51.0 ± 0.5 |
| 5 wt% JAYFLEX^{™} MB10 | 40.6 ± 0.6 |
| 10 wt% JAYFLEX^{™} MB10 | 28.5 ± 1.8 |

As seen from Table 1, JAYFLEX^{™} MB10 appeared to have a stronger effect on (greater reduction in) the contact angle in comparison to ESTEREX^{™} A32. This may suggest that JAYFLEX^{™} MB 10 improves the wettability of the separator surface better than ESTEREX^{™} A32. However, both provide significant improvement in wettability.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present invention. The invention illustratively disclosed herein suitably may be practiced in the absence of any element that is not specifically disclosed herein and/or any optional element disclosed herein. While compositions and methods are described in terms of "comprising," "containing," or "including" various components or steps, the compositions and methods can also "consist essentially of' or "consist of' the various components and steps. All numbers and ranges disclosed above may vary by some amount. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the elements that it introduces.

## Claims

1. A lithium-ion battery comprising:
a cathode;
an anode;
a separator; and
an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

2. The lithium-ion battery of claim 1, wherein the acid is selected from the group consisting of: formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, and sebacic acid.

3. The lithium-ion battery of claim 1 or claim 2, wherein the C₁₋₂₀ alcohol is selected from the group consisting of: methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, and 1-icosanol.

4. The lithium-ion battery of any one of claims 1-3, wherein the alkyl ester is a monoester.

5. The lithium-ion battery of any one of claims 1-3, wherein the alkyl ester is a diester.

6. The lithium-ion battery of any one of claims 1-5, wherein the alkyl ester additive is present at about 1 wt% to about 20 wt% by weight of the solvent.

7. The lithium-ion battery of any one of claims 1-6, wherein the separator comprises a polyolefin.

8. The lithium-ion battery of any one of claims 1-7, wherein the electrolyte solution has a contact angle relative to the separator of about 50° or less measured.

9. The lithium-ion battery of any one of claims 1-8, wherein a concentration of electrolyte in the electrolyte solution is about 5 wt% to about 35 wt% of the solvent.

10. A method comprising:
producing a lithium-ion battery with an electrolyte solution comprising a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

11. A method for producing a lithium-ion battery comprising:
positioning an anode, a cathode, and a separator of the lithium-ion battery such that the separator is between the anode and the cathode; and
adding an electrolyte solution to the lithium-ion battery such that the electrolyte solution wets the separator and contacts the anode and the cathode, wherein the electrolyte solution comprises a solvent, an electrolyte, and an alkyl ester additive, wherein the alkyl ester additive comprises an alkyl ester of an acid and a C₁₋₂₀ alcohol, and wherein an alkyl portion of the alkyl ester has 5 or more carbon atoms.

12. The method of claim 11, wherein the acid is selected from the group consisting of: formic acid, acetic acid, benzoic acid, heptanoic acid, neopentanoic acid, lauric acid, hexanoic acid, nonanoic acid, decanoic acid, glutaric acid, carbonic acid, oxalic acid, adipic acid, and sebacic acid and/or wherein the C₁₋₂₀ alcohol is selected from the group consisting of: methanol, ethanol, propanol, 1-butanol, t-butanol, 1-pentanol, 1-hexanol, 1-heptanol, 1-octanol, 2-octanol, 3-octanol, 1-nonanol, 1-decanol, 1-undecanol, 1-dodecanol, 1-tridecanol, 1-tetradecanol, 2-ethyl-1-hexanol, 1-pentadecanol, 1-hexadecanol, 1-n-heptadecanol, 1-octadecanol, 1-nonadecanol, and 1-icosanol.

13. The method of claim 11 or claim 12, wherein the alkyl ester is a monoester or wherein the alkyl ester is a diester.

14. The method of any one of claims 11-13, wherein the separator comprises a polyolefin.

15. The method of any one of claims 11-14, wherein the electrolyte solution has a contact angle relative to the separator of about 50° or less.
